(19)

**Europäisches Patentamt**
**European Patent Office**
**Office européen des brevets**

(11) **EP 3 300 446 A1**

(12) **EUROPEAN PATENT APPLICATION**

(43) Date of publication:
**28.03.2018 Bulletin 2018/13**

(51) Int Cl.:
***H04W 74/08*** (2009.01)

(21) Application number: **16306218.5**

(22) Date of filing: **22.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventors:
 • **GACANIN, Haris**
  **2018 Antwerp (BE)**
 • **ROSTAMI, Soheil**
  **2018 Antwerp (BE)**

(74) Representative: **D'Halleweyn, Nele Veerle Trees Gertrudis et al**
 **Arnold & Siedsma**
 **Bezuidenhoutseweg 57**
 **2594 AC The Hague (NL)**

(54) **METHOD AND SYSTEM FOR CONTROLLING ACCESS TO A CONTENTION-BASED ACCESS NETWORK**

(57)   A method for controlling access to a contention-based access network by non-priority stations and by priority stations associated with an upper bound delay for accessing the access network, the method comprising: receiving a counter indicating a count of all stations associated with the access network; and based on the received counter, and based on at least one of a count of non-priority stations connected to the access network and a count of priority stations connected to the access network, setting at least one channel access parameter differently for the priority stations than for the non-priority stations.

FIG. 2

**EP 3 300 446 A1**

## Description

Field of Invention

The present invention relates to controlling access to an access network. Particular embodiments relate to a method, system and computer program product, for controlling access to a contention-based access network by non-priority stations and by priority stations associated with an upper bound delay for accessing the access network.

Background

A link (e.g. a wireless links such as a Wi-Fi link) between a station and an access point of a given contention-based access network (e.g. a wireless access network) is shared among all stations within range of one another on a particular channel. Therefore, every station in the access point's coverage may be competing for channel access simultaneously. If the access network (for example a WLAN (wireless local area network)) is heavily loaded (i.e. has many stations associated with it) and has a high-density, the mean waiting time for channel access may increases significantly.

However, there are certain stations that may require ubiquitous and/or instant access - in other words, they may be associated with an upper bound delay for accessing the access network. For instance, security cameras, wireless sensors and VIP (very important person) users may require a higher amount of access - that is, access may have to be available for such entities more readily. Such entities may be termed "priority stations", in the sense that they may be associated with an upper bound delay for accessing the access network. In contrast, non-priority stations may not be associated with an upper bound delay for accessing the access network. Alternatively, a non-priority station may be associated with such an upper bound delay, but without any guarantees of service. Consequently, a per-station policy for channel access is required.

Known approaches to address this problem are based on traffic shaping and policing by delaying some or all packets to optimize different QoS (quality of service) requirements of packets of different stations. Traffic shaping methods are based on network layer functions of the access network. However, if a wireless link becomes saturated to the point where there is a significant level of contention latency in the access network, such a procedure is not effective anymore in uplink, and cannot guarantee QoS requirement of stations, including priority stations.

Summary

Embodiments of the present invention aim to prioritize access to an access network for priority stations, even when the access network is congested.

Embodiments of the present invention are based *inter alia* on the insight that the bottleneck link is in the channel access and that, consequently, it is advantageously addressed at an access layer, i.e. the level medium access control - for example, the MAC (medium access control) layer of the data link layer of the seven-layer OSI (open systems interconnection) model.

According to a first aspect of the present invention there is provided a method for controlling access to a contention-based access network by non-priority stations and by priority stations associated with an upper bound delay for accessing the access network. The method comprises receiving a counter indicating a count of all stations associated with the access network; and, based on the received counter, and based on at least one of a count of non-priority stations connected to the access network and a count of priority stations connected to the access network, setting at least one channel access parameter differently for the priority stations than for the non-priority stations.

In this manner, access to the access network can be prioritized for the priority stations, even when the access network is congested, because the channel access parameters are set differently for priority stations than for non-priority stations. Therefore, prioritization can take place even when network-level access is difficult because of the congestion.

In the context of this specification, a channel access parameter is a parameter for accessing a channel of an access network, i.e. a parameter at an access layer, in other words a parameter at a medium access control level.

According to various embodiments of the present invention, setting the at least one channel access parameter differently comprises adjusting the at least one channel access parameter for at least one priority station of the priority stations while maintaining the at least one channel access parameter for each non-priority station of the non-priority stations.

In this manner, channel access conditions for priority stations and for non-priority stations can be clearly delineated and predicted.

According to various embodiments of the present invention, the at least one channel access parameter comprises a minimum and/or maximum contention window length.

In this manner, waiting time for retransmission attempts can be controlled effectively.

According to various embodiments of the present invention, setting the at least one channel access parameter comprises setting the minimum contention window length based on a ratio representing the count of non-priority stations to the count of all stations associated with the access network; and/or setting the maximum contention window length based on the ratio representing the count of non-priority stations to the count of all stations associated with the access network, for a video traffic access category and for a voice traffic access category.

In this manner, the preponderance of priority stations to the sum of priority and non-priority stations can be taken into account, which allows to prevent over-prioritizing the priority stations. Moreover, by setting the maximum contention window length specifically for a video traffic access category and for a voice traffic access category, traffic access categories that may require faster channel access can be prioritized specifically.

According to various embodiments of the present invention, setting the at least one channel access parameter comprises setting the maximum contention window length to a default maximum contention window length, for a background traffic access category and for a best-effort traffic access category.

In this manner, by setting the maximum contention window length specifically for a background traffic access category and for a best-effort traffic access category, traffic access categories that may not require fast channel access can be controlled specifically.

According to various embodiments of the present invention, the method comprises periodically repeating the step of receiving the counter; periodically determining whether the counter has changed since a previous repetition; and, if it is determined so, repeating the step of setting the at least one channel access parameter.

In this manner, the prioritization can take into account changes in the network architecture.

According to various embodiments of the present invention, the method comprises, in response to setting the at least one channel access parameter differently, increasing the likelihood for a package to be dropped in downlink from an access point of the access network to a non-priority station of the non-priority stations; and decreasing the likelihood for a package to be dropped in uplink from a non-priority station of the non-priority stations to the access point of the access network.

In this manner, prioritization can be focussed on uplink traffic, since downlink traffic may be more forgiving.

According to another aspect of the present invention, there is provided a system for controlling access to a contention-based access network by non-priority stations and by priority stations associated with an upper bound delay for accessing the access network. The system comprises a receiving module and a setting module. The receiving module is configured for receiving a counter indicating a count of all stations associated with the access network. The setting module is configured for, based on the received counter, and based on at least one of a count of non-priority stations connected to the access network and a count of priority stations connected to the access network, setting at least one channel access parameter differently for the priority stations than for the non-priority stations.

It will be understood by the skilled person that the features and advantages disclosed hereinabove with respect to various embodiments of the method may also apply, *mutatis mutandis*, to various embodiments of the system.

According to various embodiments of the present invention, the setting module is configured for setting the at least one channel access parameter differently by adjusting the at least one channel access parameter for at least one priority station of the priority stations while maintaining the at least one channel access parameter for each non-priority station of the non-priority stations.

According to various embodiments of the present invention, the at least one channel access parameter comprises a minimum and/or maximum contention window length.

According to various embodiments of the present invention, the setting module is configured for setting the at least one channel access parameter by setting the minimum contention window length based on a ratio representing the count of non-priority stations to the count of all stations associated with the access network; and/or setting the maximum contention window length based on the ratio representing the count of non-priority stations to the count of all stations associated with the access network, for a video traffic access category and for a voice traffic access category.

According to various embodiments of the present invention, the setting module is configured for setting the at least one channel access parameter by setting the maximum contention window length to a default maximum contention window length, for a background traffic access category and for a best-effort traffic access category.

According to various embodiments of the present invention, the system comprises a control module configured for periodically repeating the step of receiving the counter; periodically determining whether the counter has changed since a previous repetition; and, if it is determined so, repeating the step of setting the at least one channel access parameter.

According to various embodiments of the present invention, the system is configured for, in response to setting the at least one channel access parameter differently, increasing the likelihood for a package to be dropped in downlink from an access point of the access network to a non-priority station of the non-priority stations; and decreasing the likelihood for a package to be dropped in uplink from a non-priority station of the non-priority stations to the access point of the access network.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis*, to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis*, to embodiments of the digital storage medium.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

Figure 1 illustrates schematically an example network architecture comprising an embodiment of a system 1 according to the present invention;

Figure 2 illustrates schematically operation of an embodiment of a method according to the present invention, for example as performed by system 1 of Figure 1;

Figure 3 illustrates schematically operation of a further developed embodiment of a method according to the present invention, for example as performed by system 1 of Figure 1;

Figure 4 illustrates schematically operation of another further developed embodiment of a method according to the present invention, for example as performed by system 1 of Figure 1; and

Figure 5 illustrates schematically an embodiment of a system 1 according to the present invention, for example a further development of system 1 of Figure 1.

Description of embodiments

Various embodiments according to the invention may prioritize channel access of priority stations at the MAC level, and advantageously without requiring modification of existing standards, in particular by configuring one or more IEEE 802.11e Enhanced Distributed Channel Access (EDCA) parameters. Thus, various embodiments according to the invention may serve as a complement to known traffic shaping approaches, in order to improve QoS of priority stations, in particular in uplink.

In shared-medium access networks (for example wireless access networks, although this specification may also be applicable to a setting of for example a wired bus network), network contention may become an issue as the number of stations, and (consequently) the traffic load increase. In order to prevent non-priority stations from using the same level of bandwidth as priority stations, a network administrator may create QoS roles with different (and presumably lower) bandwidth contracts and assign them to non-priority stations.

An approach (Bluesocket) has been suggested by ADTRAN® to address the hogging problem that guest stations (thus non-priority stations) could hog too much or even all available bandwidth, consequently reducing the available data rate for priority stations. This approach suggests to manage bandwidth by using a controller, which provides traffic prioritization and QoS, besides bandwidth management. This approach aims to provide to guest stations (an individual station, or a group of stations) a certain maximum bandwidth (e.g. 256 kbit/s), thus allowing bandwidth to remain available for priority stations.

Another approach (Trapeze Network) has been suggested by Juniper Networks® to control bandwidth characteristics of guest stations versus priority stations, by defining a class of service over wireless based on the particular station's identity. The access point allocates the guest stations' traffic and the priority stations' traffic into different queues. To keep the traffic isolated while using the same access point(s), an administrator may first establish an identity of guest stations and priority stations using an authentication procedure. The identity of the priority stations or guest stations may then determine which subnet the particular station is authorized to join. The access point may then use different traffic shaping procedures to control traffic of different subnets.

Another approach may be to use a packet shaping device at the internet gateway, which allows to establish a bandwidth limit using the routers and switches on the access network.

However, all of the above discussed approaches are based on network layer solutions. These approaches cannot prioritize different stations or even packets, if the access network is very congested due to channel access waiting time in uplink. These approaches may be effective if channel access of stations is prioritized simultaneously. In other words, bandwidth controlling in uplink may work if it is complemented with access layer station prioritization in contention-based access networks.

If a particular station is prioritized, packets of other stations may have to be dropped. According to various embodiments of the present invention, however, only packets in the downlink direction may be dropped. This is advantageous, because dropping downlink packets (from the access point to non-priority stations) may free up airtime for priority stations. In contrast, dropping uplink packets (from non-priority stations to the access point) does not free up airtime since the packets have already been transmitted over the air by those stations. Once a packet has been on the air, that airtime cannot be reclaimed and assigned to priority stations.

The IEEE 802.11e is an approved amendment to the IEEE 802.11 standard that provides prioritized QoS through EDCA (enhanced distributed channel access). Each station is configured to sense the channel and to transmit a packet if the channel is sensed to be idle for a time equal to a specific parameter, called the arbitrary inter-frame space (AIFS). In detail, the arbitrary inter-frame space number (AIFSN) may be set, as will be explained below. If the channel is sensed to be busy, the station is configured to enter a back-off interval, that is uniformly distributed between zero and another parameter, called the contention window (CW). Initially the contention window is set to a pre-defined value CWmin, and it is doubled after every transmission failure until the contention window reaches a pre-defined value CWmax. EDCA supports four different access categories (ACs), namely voice, video, best-effort and background traffic (denoted respectively as 3, 2, 1 and 0). The principles and features of embodiments of the present invention may also be applicable if more than four different access categories exist.

Default values of EDCA parameters for 802.11g/a PHY are as follows. For the background traffic access category (0), AIFSN is 7, CWmin is 15, and CWmax is 1023. For the best-effort traffic access category (1), AIFSN is 3, CWmin is 15, and CWmax is 1023. For the video traffic access category (2), AIFSN is 2, CWmin is 7, and CWmax is 15. For the voice traffic access category (3), AIFSN is 2, CWmin is 3, and CWmax is 7.

By default, IEEE 802.11e is defined in such a way that all stations in the access network use the same EDCA parameter set (AIFS(N) and CW), in order to improve fair access in the MAC layer for all the stations in terms of the average number of granted transmissions, over a sufficiently long interval. However, it is an insight of the inventors that using the same EDCA parameter set for all stations cannot offer priority stations faster channel access than non-priority stations.

According to various embodiments of the present invention, priority stations' contention window parameters for different access categories may be configured in such a way as to prioritize channel access of priority stations over non-priority stations. Preferably, contention window parameters of non-priority stations may not be modified, in order to improve simplicity and feasibility. That is, only priority stations' contention window parameters may be changed. However, it may be contemplated to also change at least one channel access parameter for the non-priority stations, preferably in order to limit their access attempts.

Preferably, the relevant EDCA parameters may be updated periodically, that is at fixed periods, for example every 15 minutes, in particular if either the number of non-priority stations or priority stations has changed over the last such period. Preferably, various embodiments according to the present invention may use TR-069, which is a protocol for communication between a station (in particular a customer premises equipment, CPE, and an auto-configuration server, ACS), and which provides secure auto-configuration.

Preferably, specific embodiments of the present invention may strive for compliance with any TR-069-enabled platform.

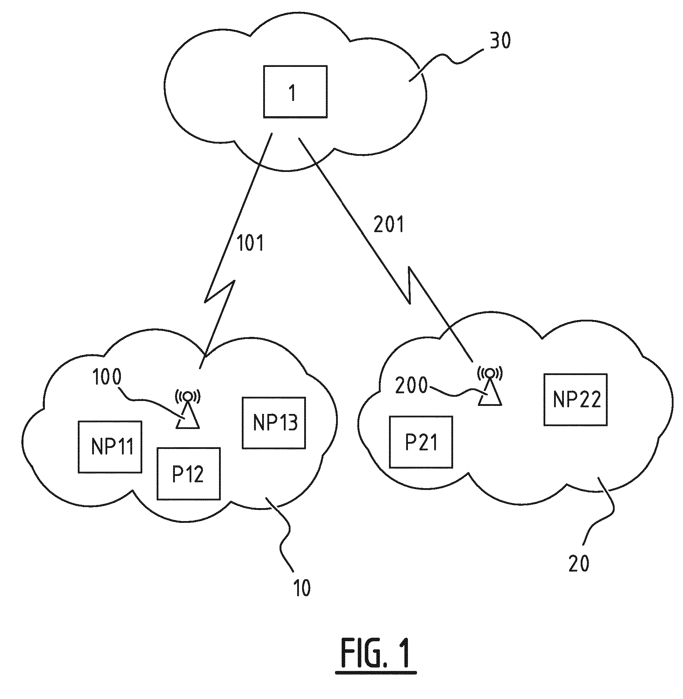

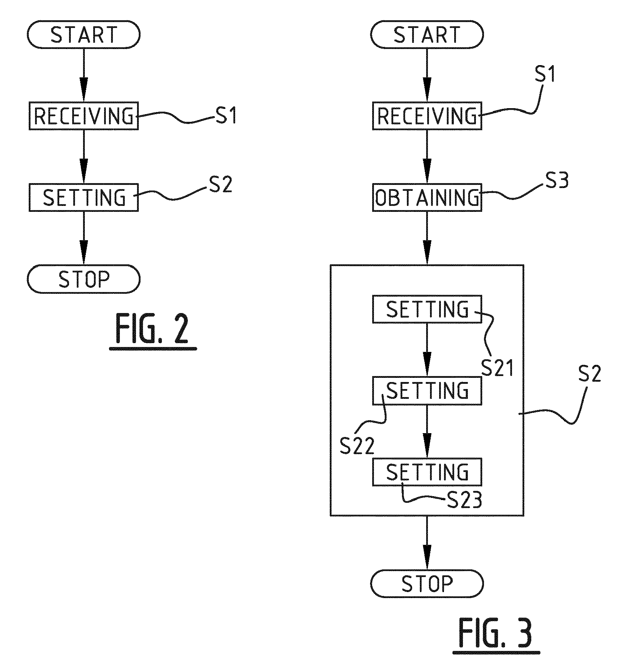

Figure 1 illustrates schematically an example network architecture comprising an embodiment of a system 1 according to the present invention. The figure shows a first network 10 and a second network 20. The first network 10 comprises access point 100, and wirelessly serves a number of stations - in this example, non-priority station NP11, priority station P12 and non-priority station NP13. The first network 10 is connected to a third network 30 via a connection 101. The second network 20 comprises access point 200, and wirelessly serves a number of stations - in this example, priority station P21 and non-priority station NP22. The second network 20 is connected to the third network 30 via a connection 201. It will be understood that the number of networks and their respective numbers of priority stations and non-priority stations are for exemplary purposes only. The third network 30, which may for example represent a management center (MC), comprises system 1 according to the present invention. It will be understood that system 1 may operate remotely from the first network 10 and the second network 20. System 1 may for example form part of an auto-configuration server (ACS). Operation of system 1 will become more clear with reference to Figures 2-5.

Figure 2 illustrates schematically operation of an embodiment of a method according to the present invention, for example as performed by system 1 of Figure 1. The method may serve for controlling access to a contention-based access network by non-priority stations and by priority stations associated with an upper bound delay for accessing the access network. The first network 10 and the second network 20 of Figure 1 are examples of such contention-based access networks, priority stations P12 and P21 are examples of such priority stations, and non-priority stations NP11, NP13 and NP22 are examples of such non-priority stations.

In operation S1, a counter may be received, that indicates a count of all stations associated with the access network. An example way of receiving such a counter is from access point 100 and/or 200, using TR-069 or another suitable network management protocol, via connection 101 and/or 201. In particular, the count of all stations associated with the access network may for example be obtained using TR-069's AssociatedDeviceNumberOfEntries parameter, as will be explained below.

In operation S2, based on the received counter, and based on at least one of a count of non-priority stations connected to the access network and a count of priority stations connected to the access network, at least one channel access parameter may be set differently for the priority stations than for the non-priority stations.

In a specific further developed embodiment, setting the at least one channel access parameter differently may comprise adjusting the at least one channel access parameter for at least one priority station of the priority stations while maintaining the at least one channel access parameter for each non-priority station of the non-priority stations.

Figure 3 illustrates schematically operation of a further developed embodiment of a method according to the present invention, for example as performed by system 1 of Figure 1. Operation S1 corresponds to Figure 2. In optional operation S3, at least one of a count of non-priority stations connected to the access network and a count of priority stations connected to the access network is obtained. This may be performed analogously to how the count of all stations associated with the access network is received in operation S1, or in another manner, for example by heuristic deduction from the count of all stations associated with the access network.

Operation S2, corresponding to Figure 2, comprises optional operations S21, S22 and S23. The order of these optional operations is not strict, and for some embodiments, one or more may be left out or re-ordered.

In operation S21, the minimum contention window length may be set based on a ratio representing the count of non-priority stations to the count of all stations associated with the access network.

In operation S22, the maximum contention window length may be set based on the ratio representing the count of non-priority stations to the count of all stations associated with the access network, for a video traffic access category and for a voice traffic access category. In other words, in operation S22, the maximum contention window length for a background traffic access category and for a best-effort traffic access category may preferably be left as they are, in order to improve compatibility and reduce any risk of side-effects. Access categories may follow IEEE 802.11e.

In operation S23, the maximum contention window length may be set to a default maximum contention window length, for a background traffic access category and for a best-effort traffic access category. Preferably, the default maximum contention window length is the default maximum contention window length of IEEE 802.11e recommendations.

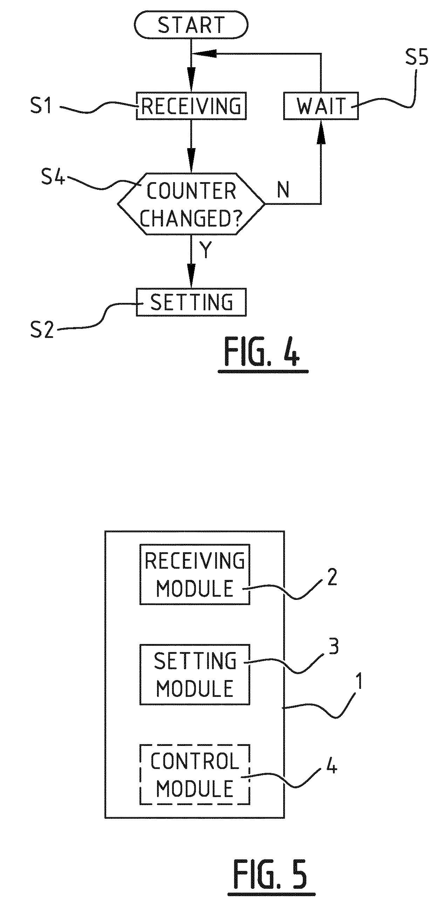

Figure 4 illustrates schematically operation of another further developed embodiment of a method according to the present invention, for example as performed by system 1 of Figure 1. This embodiment comprises periodically repeating the step of receiving the counter, in operation S1; periodically determining whether the counter has changed since a previous repetition, in operation S4; and, if it is determined so in operation S4, repeating the step of setting the at least one channel access parameter, in operation S2. The figure shows a particular implementation using a wait step in operation S5, but it will be understood that the periodical performance of the recited steps may be performed using other particular implementations.

Figure 5 illustrates schematically an embodiment of a system 1 according to the present invention, for example a further development of system 1 of Figure 1. System 1 may comprise a receiving module 2 and a setting module 3. In this illustrated embodiment, system 1 may also comprise an control module 4, but this is optional. Receiving module 2 may be configured for receiving a counter indicating a count of all stations associated with the access network. Setting module 3 may be configured for, based on the received counter, and based on at least one of a count of non-priority stations connected to the access network and a count of priority stations connected to the access network, setting at least one channel access parameter differently for the priority stations than for the non-priority stations. Optional control module 4 may be configured for periodically repeating the step of receiving the counter; periodically determining whether the counter has changed since a previous repetition; and, if it is determined so, repeating the step of setting the at least one channel access parameter - analogous to the method embodiment operation illustrated in Figure 4.

Below, a particular exemplary embodiment of a method according to the present invention, e.g. as performed by system 1 of Figure 1, will be described in more detail. It will be understood that the below described exemplary embodiment is meant for illustrative purposes, and is not meant to limit the scope of protection, which is determined by the appended claims.

In the following exemplary embodiment, the number of priority stations connected to the access network in question may be referred to as N, and the number of non-priority stations connected to that access network may be referred to as M. The number of stations P1 connected to (i.e. associated with) a given access point may for example be obtained using the following TR-069 parameter:

   P1: Device.WiFi.AccessPoint.{i}.AssociatedDevice-NumberOfEntries

It is noted that, in the context of TR-069, "stations" connected to an access point are termed "associated devices".

Of course, M + N = P1, assuming that each station connected to the access network is either a non-priority station or a priority station.

A ratio of non-priority stations to the total number of stations associated with the network may for example be calculated as follows:

$$R = \frac{M}{P_1}$$

Alternatively, a ratio may be calculated as N/P1 - however, this may require some adjustments to the exemplary mathematics below.

Intuitively, if priority stations have a smaller contention window size, their corresponding packets do not need to wait any longer than non-priority stations in a buffer to be transmitted. If the channel is idle, the first arrived packet at the buffer queue can be directly transmitted to the access point as soon as the channel is sensed to be idle for AIFS. Otherwise, the station initiates a back-off procedure, following the completion of AIFS before the transmission of the packet. In particular, it may select a back-off interval that is preferably uniformly distributed between zero and the contention window. Initially, the contention window may be set to CWmin and it may be doubled after every transmission failure until the contention window reaches CWmax. The contention window is reset to CWmin if the transmission succeeds or if the transmission retry count reaches its limit. The back-off counter decreases every idle slot after sensing that the channel is idle for AIFS, and if the back-off counter reaches zero, the station can transmit a packet.

In a particular exemplary embodiment, the CWmin and CWmax values may be calculated (in particular based on TR-069 parameters) as follows:

$$CW_{\min} = 2^{ECW_{\min}} - 1$$

$$CW_{\max} = 2^{ECW_{\max}} - 1$$

wherein ECWmin and ECWmax are 4-bit variables between 0 and 15. In this particular exemplary embodiment, ECWmin and ECWmax may be set using the following TR-069 parameters:

P2:Device.WiFi.EndPoint.{i}.AC.{i}.ECWMin
P3: Device.WiFi.EndPoint.{i}.AC.{i}.ECWMax

As described above, with a smaller CWmin and CWmax, a priority station may have a lower average back-off interval and consequently may have more opportunities to make transmission attempts on the channel. In the particular exemplary embodiment, values of CWmin and CWmax for priority stations may be calculated as follows:

$$CW_{\min}(j) = [-R \times cw_{\min}(j)] + cw_{\min}(j) + 1$$

$$CW_{\max}(j) = \begin{cases} cw_{\max}(j) & \forall j \in \{0,1\} \\ 2 \times CW_{\min}(j) + 1 & \forall j \in \{2,3\} \end{cases}$$

wherein $cw_{\min}(j)$ and $cw_{\max}(j)$ are default values of CWmin and CWmax for access category j, as described above. In this particular exemplary embodiment, CWmax for the voice traffic access category and the video traffic access category may preferably follow the standard IEEE802.11e recommendation (CWmax = 2 CWmin + 1), and values of CWmax for the background traffic access category and the best-effort traffic access category may preferably also be kept as default. Therefore ECWmin(j) and ECWmax(j) for the priority stations may be calculated as follows:

$$P_2 = ECW_{\min}(j) = Log_2(1 + CW_{\min}(j))$$

$$P_3 = ECW_{\max}(j) = Log_2(1 + CW_{\max}(j))$$

When there is a relatively smaller number of priority stations and a relatively larger number of non-priority stations (i.e. a relatively large ratio R) in the access network, the particular exemplary embodiment comprises reducing CWmin for priority stations and CWmax for priority stations relatively more. By reducing the mean back-off interval of priority stations, the spacing between successive frame transmissions is reduced, and channel access for priority stations is improved.

In contrast, when there is a relatively larger number of priority stations and a relatively smaller number of non-priority stations (i.e. a relatively smaller ratio R), the particular exemplary embodiment still comprises reducing CWmin for priority stations and CWmax for priority stations, but relatively less than above. This is based on the inventors' insight that sharply reducing CWmin and/or CWmax not only prioritizes priority stations over non-priority stations, but also increases waiting time and collision among priority stations. Therefore, it is advantageous to use a small reduction of CWmin and/or CWmax for priority stations in the small R scenario, as compared to the large R scenario.

Purely as an illustrative example, in the following, for a number of different scenarios, exemplary values for CWmin and CWmax are given.

The default values are as follows: for CWmin(0) and CWmax(0), they are 15 and 1023; for CWmin(1) and CWmax(1), they are 15 and 1023; for CWmin(2) and CWmax(2), they are 7 and 15; and for CWmin(3) and CWmax(3), they are 3 and 7.

For a scenario with M=14 and P1=15 - (that is, with 15 stations associated with the access network, of which 14 are non-priority stations and 1 is a priority station), the values may be as follows: CWmin(0) and CWmax(0), they may be 2 and 1023; for CWmin(1) and CWmax(1), they may be 2 and 1023; for CWmin(2) and CWmax(2), they may be 1 and 3; and for CWmin(3) and CWmax(3), they may be 1 and 3.

For a scenario with M=10 and P1=15 - (that is, with 15 stations associated with the access network, of which 10 are non-priority stations and 5 are priority stations), the values may be as follows: CWmin(0) and CWmax(0), they may be 6 and 1023; for CWmin(1) and CWmax(1), they may be 6 and 1023; for CWmin(2) and CWmax(2), they may be 3 and 7; and for CWmin(3) and CWmax(3), they may be 2 and 5.

For a scenario with M=5 and P1=15 - (that is, with 15 stations associated with the access network, of which 5 are non-priority stations and 10 are priority stations), the values may be as follows: CWmin(0) and CWmax(0), they may be 11 and 1023; for CWmin(1) and CWmax(1), they may be 11 and 1023; for CWmin(2) and CWmax(2), they may be 5 and 11; and for CWmin(3) and CWmax(3), they may be 3 and 7.

In further developed embodiments of the present invention, additionally to or as an alternative to using the contention window length, it may be contemplated to use a clear channel assessment (CCA) threshold, and/or a transmit opportunity (TXOP), as defined in the IEEE 802.11e standard.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

**Claims**

1. A method for controlling access to a contention-based access network by non-priority stations and by priority stations associated with an upper bound delay for accessing the access network, the method comprising:

   - receiving a counter indicating a count of all stations associated with the access network; and
   - based on the received counter, and based on at least one of a count of non-priority stations connected to the access network and a count of priority stations connected to the access network, setting at least one channel access parameter differently for the priority stations than for the non-priority stations.

2. The method of claim 1, wherein setting the at least one channel access parameter differently comprises adjusting the at least one channel access parameter for at least one priority station of the priority stations while maintaining the at least one channel access parameter for each non-priority station of the non-priority stations.

3. The method of any one of the previous claims, wherein the at least one channel access parameter comprises a minimum and/or maximum contention window length.

4. The method of claim 3, wherein setting the at least one channel access parameter comprises:

   - setting the minimum contention window length based on a ratio representing the count of non-priority stations to the count of all stations associated with the access network; and/or
   - setting the maximum contention window length based on the ratio representing the count of non-priority stations to the count of all stations associated with the access network, for a video traffic access category and for a voice traffic access category.

5. The method of claim 3 or 4, wherein setting the at least one channel access parameter comprises:

   - setting the maximum contention window length to a default maximum contention window length, for a background traffic access category and for a best-effort traffic access category.

6. The method of any one of the previous claims, comprising:

   - periodically repeating the step of receiving the counter;
   - periodically determining whether the counter has changed since a previous repetition; and
   - if it is determined so, repeating the step of setting the at least one channel access parameter.

7. The method of any one of the previous claims, comprising, in response to setting the at least one channel access parameter differently:

   - increasing the likelihood for a package to be dropped in downlink from an access point of the access network to a non-priority station of the non-priority stations; and
   - decreasing the likelihood for a package to be dropped in uplink from a non-priority station of the non-priority stations to the access point of the access network.

8. A system for controlling access to a contention-based access network by non-priority stations and by priority stations associated with an upper bound delay for accessing the access network, the system comprising:

   - a receiving module configured for receiving a counter indicating a count of all stations associated with the access network; and
   - a setting module configured for, based on the received counter, and based on at least one of a count of non-priority stations connected to the access network and a count of priority stations connected to the access network, setting at least one channel access parameter differently for the priority stations than for the non-priority stations.

9. The system of claim 8, wherein the setting module is configured for setting the at least one channel access parameter differently by adjusting the at least one channel access parameter for at least one priority station of the priority stations while maintaining the at least one channel access parameter for each non-priority station of the non-priority stations.

10. The system of any one of the claims 8-9, wherein the at least one channel access parameter comprises a minimum and/or maximum contention window length.

11. The system of claim 10, wherein the setting module is configured for setting the at least one channel access parameter by:

   - setting the minimum contention window length based on a ratio representing the count of non-priority stations to the count of all stations associated with the access network; and/or
   - setting the maximum contention window length based on the ratio representing the count of non-priority stations to the count of all stations associated with the access network, for a video traffic access category and for a voice traffic access category.

12. The system of claim 10 or 11, wherein the setting module is configured for setting the at least one channel access parameter by:

   - setting the maximum contention window length to a default maximum contention window length, for a background traffic access category and for a best-effort traffic access category.

13. The system of any one of the claims 8-12, comprising a control module configured for:

   - periodically repeating the step of receiving the counter;
   - periodically determining whether the counter has changed since a previous repetition; and
   - if it is determined so, repeating the step of setting the at least one channel access parameter.

14. The system of any one of the claims 8-13, configured for, in response to setting the at least one channel access parameter differently:

   - increasing the likelihood for a package to be dropped in downlink from an access point of the access network to a non-priority station of the non-priority stations; and
   - decreasing the likelihood for a package to be dropped in uplink from a non-priority station of the non-priority stations to the access point of the access network.

15. A computer program product comprising a computer-executable program of instructions for performing, when executed on a computer, the steps of the method of any one of claims 1-7.

FIG. 1

FIG. 2

FIG. 3

FIG. 4

FIG. 5

Europäisches
Patentamt

European
Patent Office

Office européen
des brevets

# EUROPEAN SEARCH REPORT

Application Number

EP 16 30 6218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 978 636 B2 (GAUR SUDHANSHU [US]) 12 July 2011 (2011-07-12) * column 9, line 28 - column 10, line 15 * * column 12, line 9 - line 17; figure 7 * * column 7, line 25 - line 27 * | 1-15 | INV. H04W74/08 |
| A | US 2006/034210 A1 (CHU LIWEN [US] ET AL) 16 February 2006 (2006-02-16) * paragraph [0008] - paragraph [0015] * * paragraph [0055] - paragraph [0103] * | 1-15 | |
| A | US 2012/076074 A1 (PARK JOUN SUP [KR] ET AL) 29 March 2012 (2012-03-29) * paragraph [0009] - paragraph [0018] * * paragraph [0028] - paragraph [0047] * | 1-15 | |
| A | CHIH-MING YEN ET AL: "An adaptive p-persistent MAC scheme for multimedia WLAN", IEEE COMMUNICATIONS LETTERS, IEEE SERVICE CENTER, PISCATAWAY, NJ, US, vol. 10, no. 11, 2006, pages 737-739, XP011151542, ISSN: 1089-7798 * the whole document * | 1-15 | TECHNICAL FIELDS SEARCHED (IPC)  H04W |

The present search report has been drawn up for all claims

| Place of search | Date of completion of the search | Examiner |
|---|---|---|
| Munich | 21 February 2017 | Koutsopoulou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6218

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2017

| Patent document cited in search report | | Publication date | Patent family member(s) | | Publication date |
|---|---|---|---|---|---|
| US 7978636 | B2 | 12-07-2011 | JP 2008245278 A<br>US 2008240049 A1 | | 09-10-2008<br>02-10-2008 |
| US 2006034210 | A1 | 16-02-2006 | NONE | | |
| US 2012076074 | A1 | 29-03-2012 | KR 20120032301 A<br>US 2012076074 A1<br>US 2014003412 A1 | | 05-04-2012<br>29-03-2012<br>02-01-2014 |

EPO FORM P0459

For more details about this annex : see Official Journal of the European Patent Office, No. 12/82